# EUROPEAN PATENT APPLICATION

(11) **EP 3 358 875 A1**
(43) Date of publication of application: **08.08.2018**
(21) Application number: 17290012.8
(22) Date of filing: 03.02.2017
(51) Int. Cl.: H04W 12/02, G06F 21/62

(54) **METHOD FOR PROTECTING PRIVACY IN DATA QUERIES**

(71) Applicant: Alcatel Lucent, 91620 Nozay (FR)
(72) Inventor: Chen, Ruichuan, 70435 Stuttgart (DE); JOY, Joshua, Los Angeles, CA 90025 (US)
(74) Representative: Louis Pöhlau Lohrentz

(57) **Abstract**

The invention concerns a method for protecting privacy in data queries. The method comprises receiving, by an aggregator (2), a plurality of answers from a respective plurality of users (1) to a query transmitted to the users (1). The method further comprises one or more of: randomly sampling, by the aggregator (2), only a partial group of the users (1); receiving, by the aggregator (2), the plurality of answers from the users (2) via an anonymity network; using, by the aggregator (2), software verifiable by the users (1) and/or hardware verifiable by the users (1); receiving, by the aggregator (2), the plurality of answers from the users (1), wherein the answers are encrypted using one-time pad encryption. The answers may then be received from the aggregator by an analyst (3).

## Description

### Field of the invention

The disclosure relates to the field of providing privacy in data queries, e.g. more specifically social network queries, for example and without limitation, queries on data in the context of social networks.

### Background

This section introduces aspects that may be helpful to facilitate a better understanding of the inventions. Accordingly, the statements of this section are to be read in this light and are not to be understood as admissions about what is in the prior art or what is not in the prior art. Any techniques or schemes described herein as existing or possible are presented as background for the present disclosure, but no admission is made thereby that these techniques and schemes were heretofore commercialized, or known to others besides the inventors.

Data queries may have the objective to collect data about persons, which may be referred to as users or clients. Many times there is the desire to provide the data about the users, however without denoting which user provided with data. This means the data are to be provided in an anonymous way, or at least the correlation of particular data to particular users is sufficiently de-correlated to ensure that an observer cannot connect the data to the user that is the source of that data.

In particular, when data about social networks (such as Facebook, Linkedln, and/or Google+) are provided, there is a desire to provide the data without revealing which user/client has given a particular answer to a query which has been transmitted to the user/client and to which the user provided its data in the form of its answer(s).

However, current privacy preserving systems do not provide satisfactory solutions to provide anonymity of the users, in particular in regard of queries concerning social network data of the users.

Therefore, there is a desire to overcome the aforementioned shortcomings.

### Summary of the Invention

The inventors disclose various apparatus and methods that may be beneficially applied to, e.g., achieve anonymity of user data provided in data queries, in particular data provided by answers to queries about social network data of the users. While such embodiments may be expected to provide improvements in performance of such apparatus and methods and/or privacy protection to such subjects, no particular result is a requirement of the present invention unless explicitly recited in a particular claim.

One embodiment provides a method, e.g. for protecting privacy in internet-based data queries. The method includes receiving by an aggregator, via an internet connection, a plurality of answers from a respective plurality of users to a query transmitted to the users. The method further comprises one or more of randomly sampling, by the aggregator, only a partial group of the available users; receiving, by the aggregator, the plurality of answers from the users via an anonymity network; using, by the aggregator, software verifiable by the users and/or hardware verifiable by the users; and receiving, by the aggregator, the plurality of answers from the users, wherein the answers are encrypted using one-time pad encryption.

Another embodiment provides an aggregator used for protecting privacy in data queries. The aggregator is adapted to receive via the internet a plurality of answers from a respective plurality of users to a query transmitted to the users via the internet. The aggregator is further adapted to one or more of randomly sampling a predetermined subset of the users, receiving via the internet the plurality of answers from the users via an anonymity network, receiving via the internet the plurality of answers from the users, wherein the answers are encrypted using one-time pad encryption; and using software verifiable by the users and/or hardware verifiable by the users.

Another embodiment provides a software product adapted to execute the described method, when the software product is executed by a computer.

In some embodiments, the query is directed from an analyst to the clients, wherein the query may originate from the analyst.

In some embodiments, the query is directed from an analyst to the clients via the aggregator.

In some embodiments, the aggregator selects only a partial group of the users, e.g. a proper subset of the users. In such embodiments the aggregator may drop or disregard the answers of the users which are not randomly selected.

In some embodiments, in receiving the plurality of answers from the users via an anonymity network, the aggregator may receive the plurality of answers from the users via the Tor network.

In some embodiments, the aggregator and one or more network nodes between the aggregator and the users use software verifiable by the users and/or hardware verifiable by the users. In some cases, answers may be sent from the users to the aggregator only if the one or more network nodes and the aggregator pass a respective verification test based on the software and/or hardware used by the one or more nodes and the aggregator, respectively. The software verifiable by the users may comprise digitally signed software. The hardware verifiable by the users may comprise hardware including a route key.

In some embodiments, the answers are encrypted by the user(s) using one-time pad encryption. In such embodiments the aggregator may combine the plurality of answers, e.g. by an XOR-operation, wherein from the combination of the answers the number of answers having a respective value (e.g. "yes") can be deducted without reference to the particular user which gave a particular answer.

In more detail, in receiving the plurality of answers from the users, wherein the answers are encrypted using one-time pad encryption, in some embodiments the aggregator combines the plurality of answers, e.g. by an XOR-operation, resulting in a first intermediate result. Preferably, the aggregator receives from a different aggregator a second intermediate result, which has been determined by the different aggregator by combining a plurality of keys, e.g. by an XOR-operation. In various embodiments, the different aggregator has received the plurality of keys from the users, each key belonging to a respective answer of the plurality of answers, by which the users have encrypted their respective answers using one-time pad encryption. The aggregator may then combine the first intermediate result and the second intermediate result by an XOR-operation, resulting in a final result.

The final result indicates the number of answers having a particular value (e.g. "yes" or e.g. "no"), preferably without denoting a particular user which gave a particular answer. Thus, preferably, the answers of the users are processed into the final result, which may be referred to herein as the "processed answers".

The answers, the keys, and the first and the second intermediate result may be implemented by respective rows of digits in a computational method performed on a computer. Combining the plurality of answers by an XOR-operation, combining a plurality of keys by an XOR-operation and combining the first intermediate result and the second intermediate result by an XOR-operation may further include combining the digits of answers, the keys, the first and the second intermediate result, respectively.

In some embodiments, the answers of the users are organized in the form of buckets, e.g. ranges of answer values.

In some embodiments, an answer is given by a user of the plurality of users by setting a flag in the bucket corresponding to the range which corresponds to a value of the answer and by resetting a flag a flag in the remaining buckets of the ranges which do not correspond to the value of the answer. The flag may be, e.g. a digital value, e.g. "1" or "0", or a Boolean value, e.g. "TRUE" or "FALSE".

In some embodiments, the aggregator further verifies a respective Jacobi symbol of a respective answer of the plurality of answers received from the users, wherein the answers have been encrypted by the users by means of the Goldwasser-Micali cryptosystem before being sent to the aggregator, and/or the aggregator may re-randomize the answers, preferably by homomorphically XOR-ing each digit of a respective answer with a randomly encrypted "0"-digit. Such embodiments may find particular utility in the case that the aggregator randomly samples only a partial group of the users and/or receives the plurality of answers from the users via an anonymity network and/or uses software verifiable by the users and/or hardware verifiable by the users.

In some embodiments, the aggregator adds noisy answers to the answers, until a predetermined privacy threshold is satisfied. In particular, adding noisy answers to the answers may comprise adding noisy coins to the answers.

In some embodiments, in particular after processing of the answers according to the respective implementation, the aggregator transmits the answers to an analyst. The analyst may decrypt and tabulate the answers received from the aggregator.

In some embodiments, the query is a one shot batch query.

In some embodiments, the query is related to social network data of the users.

In some embodiments, the method may be implemented by a plurality of aggregators and/or a plurality of analysts.

In some embodiments, the answers are directed by the users to the aggregator(s) via a further entity, which may be referred to without limitation as a "warehouse". In a warehouse query, an analyst query may be transmitted via the aggregator to the warehouse. The warehouse may transmit the query to the users so as to inform the users on the query. Preferably, in a warehouse query, the answers of the users are transmitted to the warehouse by repeatedly transmitting, by the users, data to the warehouse which include the answers to the query. The warehouse may transmit the answers of the users to the aggregator, which may then transmit the answers to the analyst after performing aggregation tasks. Preferably, since the users are informed on the query by the warehouse each time a query is running, the users are caused to subtract a privacy deficit on their privacy budget depending on how much answers are transmitted from the warehouse to the aggregator.

Various embodiments may be implemented by the use of hardware, software or combination thereof.

### Brief description of the figures

Features and advantages of various embodiments will be more completely understood by appreciating the following detailed description of preferred embodiments with reference to the figures, wherein
- Fig. 1: depicts a schematic block diagram showing an overview of an embodiment, in which answers to queries are provided by a user, to an analyst via an aggregator;
- Fig. 2: depicts a schematic block diagram showing an overview of an embodiment, in which the aggregator of Fig. 1 receives answers via one or more network nodes;
- Fig. 3: depicts a schematic block diagram showing an overview of a further preferred embodiment of the method for protecting privacy in data queries; and
- Fig. 4: depicts an example embodiment showing a flow of answers from a plurality of users to an analyst,

### Detailed description

Various embodiments are now described with reference to the drawings, wherein like reference numbers are used to refer to like elements throughout. In the following description, for purposes of explanation, numerous specific details are set forth in order to provide a thorough understanding of one or more embodiments. It may be evident, however, that such embodiment(s) may be practiced without these specific details. In other instances, well-known structures and devices are shown in block diagram form in order to facilitate describing one or more embodiments.

An objective of various embodiments is to achieve anonymity of users' data provided in data queries, in particular data provided in response to queries about social network data of the users.

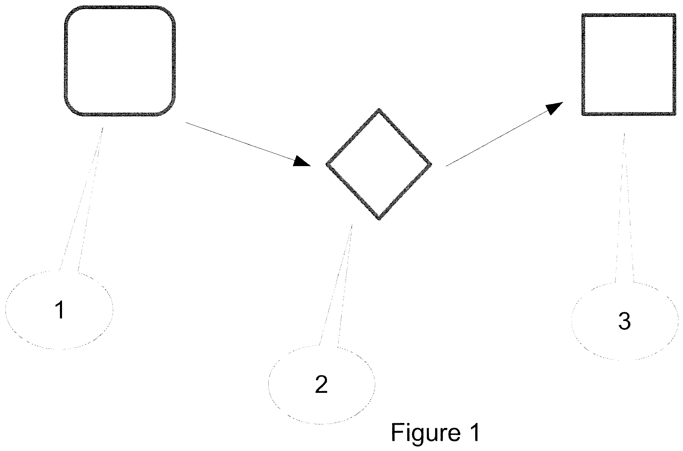

Referring now to Fig. 1, an embodiment is illustrated of a method, e.g. for protecting privacy in data queries. Users 1 direct a plurality of answers toward an aggregator 2 via a communication network, e.g. the internet. The feature "users 1" may refer to a single user 1 or to one or more users 1 according to the context. Similarly, if referred to in the singular, the feature "user 1" does not exclude the implementation by plural users 1.

Preferably, each user 1 sends one or more answers via the network. Illustratively each user sends one answer to the aggregator 2. In various embodiments it is expected that the aggregator 2 has previously sent a query to the users 1 (not explicitly depicted). In some embodiments the query may originate from an analyst 3 and if so is preferably directed toward the users 1 via the aggregator 2.

In some embodiments the aggregator 2 is configured to select from the users 1 a subset of answers made available by the users 1. In such cases the aggregator 2 may randomly sample only a proper subset of the answers from the users 1. In such cases the aggregator 2 may drop, e.g. disregard, the answers of the users 1 for which the answers are not selected. In any case, the aggregator 2 directs the selected answers from the users 1 toward an analyst 3.

In such embodiments as those in which the answers are randomly selected, the social network structure correlation (in case of social network data queries) is effectively broken and it is sufficiently computationally difficult to make inferences about a single user based on friends of friends of the user 1 such that the anonymity of the user 1 is effectively protected.

More generally, preferably, by randomly selecting only a subset of the users of which the answers are considered, the correlation of which user(s) gave which answer(s) are broken, because it cannot be derived from the answers, at least in a practical sense, if a particular user is included into the users of which the answers are considered, thus providing more privacy to the users.

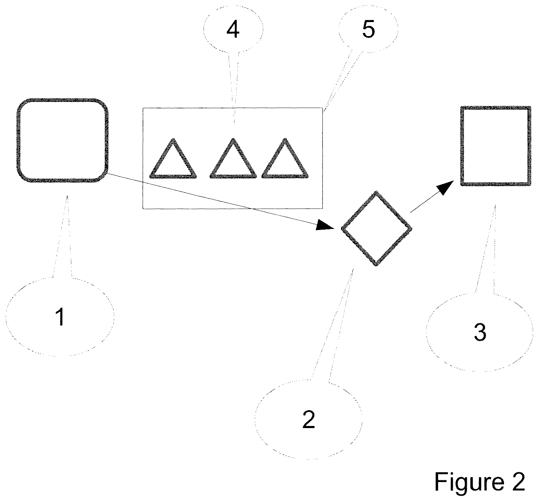

Fig. 2 presents another embodiment, in which the aggregator 2 receives the plurality of answers from the users 1 via an anonymity network 5. Those skilled in the pertinent art will appreciate that an anonymity network may be a network of relays connected via the Internet that operate to conceal a user's location and usage from anyone conducting network surveillance or traffic analysis. One such anonymity network 5 is the "Tor" network, wherein a Tor network as such is known in the art ("Tor" originally stood for "The onion router"). Other such networks include Aqua and i2P. In some embodiments the function of the anonymity network may be provided by an anonymous messaging system, such as Riposte. For the purposes of this discussion and the claims, this messaging system, and others that provide substantially similar functionality, are considered an anonymity network.

Preferably, the anonymity network 5 comprises one or more intermediate nodes 4 between the users 1 and the aggregator 2. Preferably, one or more intermediate nodes 4 and/or the aggregator 2 add a certain delay into the answers of the users 1, which preferably makes it more difficult to link a particular answer to a particular user 1.

Preferably, by the anonymity network between the users 1 and the aggregator 2, the users 1 which give the answers cannot be privatized and/or individualised, thus enhancing the privacy of the users 1.

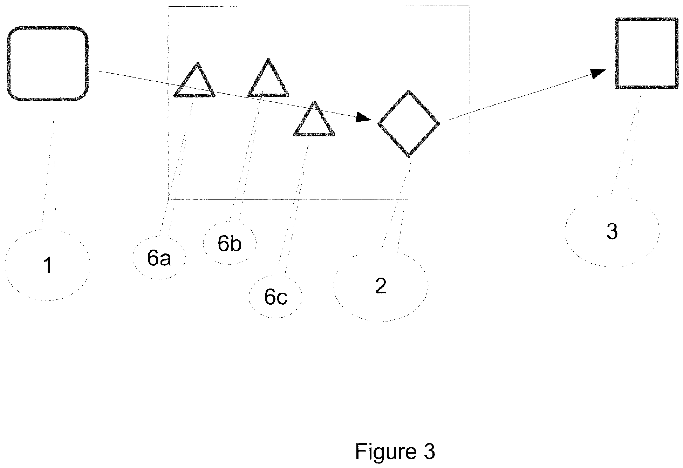

Fig. 3 presents another embodiment in which the aggregator 2 uses software verifiable by the users 1. Alternatively, or in combination, the aggregator 2 uses hardware verifiable by the users 1. Preferably, not only the aggregator 2, but also one or more further nodes 6a, 6b, 6c (collectively 6) between the users 1 and the aggregator 2 use software verifiable by the users and/or hardware verifiable by the users. The further nodes 6 may correspond to the intermediate nodes 4 described with reference to Fig. 2 or may be different from the intermediate nodes 4.

Preferably, answers are sent from the users 1 to the aggregator 2, only if the one or more nodes 6 and the aggregator 2 pass a respective verification test based on the software and/or hardware used by the one or more nodes 6 and the aggregator 2, respectively.

In more detail, preferably, a user 1 transmits its answer only to a first node 6a, if the first node 6a passes a verification test.

The first node 6a may be a load balancer of the cloud to which the nodes 6 belong.

In some embodiments the verifiability of the software by the users 1 includes using digitally signed software.

In some embodiments the verifiability of the hardware by the users 1 includes using a route key.

In embodiments that include use of a route key, it may be preferable that the route key is included in the CPU and BIOS of the one or more nodes 6 and the aggregator 2, respectively.

Thus, in the described example, the first node 6a may be preferably controlled based on the software and/or hardware used by the first node 6a. In case the control is performed based on the used software, it is controlled, if the software used by the first node 6a is actually the software which the first node 6a is allowed (e.g. allowed by the users 1 or a network operator) to use. This control may be provided based on the digital signature of the used software. In case the control is performed based on the used hardware, it is controlled, if the hardware used by the first node 6a is actually the hardware which the first node 6a is allowed (e.g. allowed by the users 1 or a network operator) to use. This control may be provided based on the route key of the hardware.

In an embodiment, in the event that the first node 6a passes the verification test, the user 1 sends its answer to the first node 6a, e.g. because the used hardware and/or software corresponds to the allowed software and/or hardware.

In a similar embodiment, the first node 6a performs a verification test on the next node 6b. The first node 6a transmits the answer of the user 1 to the next node 6b, only if the next node 6b passes a verification test based on the software and/or hardware used by the next node 6b.

In case the next node 6b does not pass the verification test, the answer is not transmitted to the next node 6b. Then, preferably, either the first node 1a performs a verification test on a further node, e.g. node 6c, and transmits the answer to the further node 6c, in the event that the further node 6c passes the verification test. Otherwise, if the further node 6c does not pass the verification test or if such further node 6c does not exist (or is not reachable from the first node 6a), the answer is not transmitted.

In some embodiments, in the event that the answer is transmitted along the nodes, e.g. 6a, 6b, 6c, the last node before the aggregator 2, e.g. node 6c, performs a similar verification test of the aggregator 2 on the condition that the aggregator 2 passes the verification test, and transmits the answer to the aggregator 2,.

Thus in some embodiments, by verification of each node 6 (and the aggregator 2), it may be assured that an answer is transmitted only on nodes 6, which pass the verification test, and only to the aggregator 2, on the condition that the aggregator 2 passes the verification test.

Preferably, as described above, the user 1 and the first node 6a, etc., perform the verification test of the subsequent nodes (and finally of the aggregator 2).

Alternatively, the control of a node 6 (and finally of the aggregator 2) might be provided by a separate entity, e.g. a third party verifier.

Preferably, by the use of software and/or hardware verifiability by the users 1, it can be assured that the nodes 6 and/or the aggregator 2 only use hardware and/or software which the users 1 agree to use. Protection may thereby be provided against a possible attacker which might try to implement (in other words impersonate) the role of a node 6 or of the aggregator 2, since the attacker can be detected when failing to use approved hardware and/or software.

In another embodiment, the analyst 3 also uses software and/or hardware verifiable by the users 1. In such embodiments, the respective implementation which has been described in regard of the nodes 6 and the aggregator 2 may also apply correspondingly to the analyst 3. In particular, in such embodiments the answers are transmitted from the aggregator 2 to the analyst 3 on the condition that the analyst 3 passes a verification test which might be performed by the aggregator 2 or by a separate entity.

Preferably, in case the verification test based on software and/or hardware "verifiable by the users 1" is performed not by the users 1 (directly), but by the nodes 6 (e.g. by the first node 6a on the next node 6b), by the aggregator 2 (e.g. on the analyst 3) or by the separate entity (on any of nodes 6 etc.), the verification test may be regarded as being performed by the respective node 6, the aggregator 2 or the separate entity, respectively, "on behalf of the users 1 ". In particular, the software and/or hardware is also in this case considered to be "verifiable by the users 1 ", just the verification by the users 1 (e.g. on the first node 6a) is prolonged by the respective nodes 6 on the subsequent nodes 6, etc.

Preferably, the query refers to actual data. Alternatively, or in combination, the query may refer to previous data provided by the users.

Preferably, the data provided by the users are streaming data, provided as a continuous data stream from the users 1.

In some embodiments, the data of the users are received by the aggregator 2 via a further entity, which might be termed a "warehouse" (not depicted), and in such cases the query may be referred to as a "warehouse query", wherein the warehouse includes data storage. Preferably, in a warehouse query; the query of the analyst 3 is transmitted, e.g. via the aggregator 2, to the warehouse, which then transmits the query to the users 1 so as to inform the users 1 on the query. Preferably, in a warehouse query, the users 1 send their data including the answers to the query continuously to the warehouse, and the warehouse transmits the data of the users 1 as answers to the query to the aggregator 2, which preferably sends the answers to the analyst 3.

In some embodiments, as the users 2 are informed on the query by the warehouse each time a query is running, an appropriate privacy deficit can be subtracted by the users 1. The privacy deficit is described in more detail below.

Preferably, additional privacy protection is provided by the aggregator 2, e.g. by rerandomizing the answers before sending the answers to the analyst 3 to protect against the analyst 3 re-running the same query repeatedly and observing the pattern of answers. The aggregator 2 may have knowledge of the count of the data, and can thus add appropriate noise from a pool of noisy coins. (Noise addition by noisy coins is described in more detail below.)

Preferably, in any of the above-described embodiments, the aggregator 2 verifies a respective Jacobi symbol of a respective answer of the plurality of answers received from the users 1, wherein the answers have been encrypted by the users 1 by means of the Goldwasser-Micali cryptosystem before being sent to the aggregator 2. The Goldwasser-Micali cryptosystem is known to the skilled person, and may be referred to herein for brevity as Goldwasser-Micali, or simply "GM".

Further, it may be preferable, in case of any of the above described embodiments, that the aggregator 2 re-randomizes the answers, e.g. by homomorphically XOR-ing each digit of a respective answer with a randomly encrypted "0"-digit.

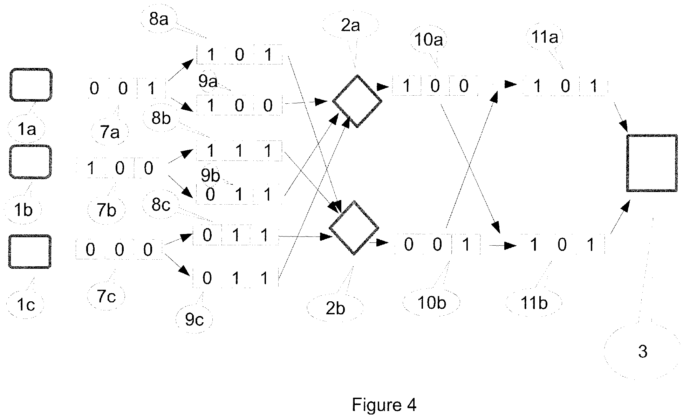

Fig. 4 presents an embodiment in which the plurality of answers received by the aggregator 2 from the users 1 are encrypted using one-time pad encryption. In this embodiment, three users 1 of the plurality of users 1 are depicted explicitly, namely user 1 a, user 1 b and user 1 c. After receiving a query from the aggregator 2, each user 1a, 1b and 1c gives one answer, respectively. User 1a gives answer 7a, user 1 b gives answer 7b and user 1 c gives answer 7c.

Preferably, an answer is provided in the form of a bucket. A bucket in the embodiment described with reference to Fig. 4 relates, e.g. corresponds, to an entry in a database, the database being of length of at least the number of the plurality of users 1. The entry corresponding to the bucket can be either TRUE (e.g. "1 ") or FALSE (e.g. "0"). Each bucket is indicated by an index. If a user 1 provides an answer to a query, the user 1 randomly chooses an index and writes its answer, e.g. TRUE for "yes" or FALSE for "no", into the bucket with the index chosen by the user 1.

In other words, preferably, the answers of the users 1 may be viewed and treated as a database having a number of buckets (entries) corresponding to at least the number of the users 1. In the present case, a database representing the answers has three buckets, because there are three users 1a, 1b, 1c. Each user 1a, 1b, 1c writes its answer into a different corresponding bucket, e.g. a bucket having an index different from the indices of the other buckets, where the other users write their answers.

In greater detail, in the embodiment depicted in Fig. 4, the answers of the users are given in the form of "yes" or "no", as a nonlimiting example. In the embodiment of Fig. 4, the aggregator 2 has sent to the users 1 a, 1b and 1c the query, e.g. whether the respective user is located at a particular location, for example at the place "Porsche-Platz". Therefore, a user might give the answer "yes" or might give the answer "no". If a user is at this place, the user will give the answer "yes" and therefore puts a TRUE value, e.g. a "1" digit, in one of the buckets of the answer, wherein the user might choose by itself in which bucket the user puts the TRUE value. Thus, in the case the user wants to give the answer "yes", the user will put one TRUE value in a bucket of his answer. It is not important, in which one of buckets, the user puts the TRUE value. The user 1 might choose the bucket (e.g. the index) randomly or on its own choice. However, every user 1 a, 1 b, 1 c should select a different bucket to put its TRUE value answer, if the respective user wants to give the "yes" answer.

In the example, depicted in Fig. 4, user 1a wants to give the answer "yes" and randomly or on its own choice selects the third bucket to put the TRUE value into its answer 7a indicating that user 1 a is at the above-cited place. Similarly, user 1 b also gives the "yes" answer and chooses the first bucket to put the TRUE value in its answer 7b. The other buckets of answers 7a and 7b are filled with FALSE values, e.g. "0" digits, by users 1 a and 1 b, respectively. User 1 c is not at the above cited place and therefore gives a "no" answer. To do this, user 1 c does not put any TRUE value in a bucket of answer 7c, but user 1 c puts a FALSE value in each bucket of answer 7c.

Then, preferably, each user randomly or on its own choice chooses a key to encrypt his answer. User 1 a chooses key 8a, user 1 b chooses key 8b and user 1c chooses key 8c. Each user encrypts its answer with its key, for instance by computing an XOR of the digits of the respective key with the digits of the respective answer, to produce an encrypted answer. User 1a encrypts its answer 7a with its key 8a to achieve answer 9a, more specifically the encrypted answer 9a. In further example, each digit on a particular position of the answer 7a may be combined with the respective digit on the same position of the key 8a by an XOR ("exclusive or", sometimes depicted as ⊕) combination, resulting in the digit on the respective position of the answer 9a. For example, on the first position, the digit of the answer 7a is "0", on same position, the digit of the key 8a is "1", and thus the digit on the same position of the (encrypted) answer 9a is "1 ". Similarly, user 1 b encrypts its answer 7b with its key 8b, resulting in (encrypted) answer 9b and user 1c encrypts its answer 7c with its key 8c to (encrypted) answer 9c.

In various embodiments, the answers 7a, 7b and 7c are encrypted by the users 1a, 1b, 1c by means of one-time pad encryption. In this case, a key 8a, 8b, 8c is used only one time (once). Further, in a one-time pad encryption, the length of the key is at least the length of the answer to be encrypted. For example, the length of key 8a (namely three digits) is of length of the answer 7a to be encrypted. Further, for example, user 1 a uses key 8a only one time, namely for encryption of its answer 7a into the encrypted answer 9a. This means, user 1a will not use the key 8a (namely the depicted "1", "0", "1") for encrypting another answer of user 1a, which the user 1a might provide on a further query (which is not further described and depicted here). Similarly, users 1b and 1 c use their respective keys 8b and 8c only once, namely for answer 7b and 7c, respectively, and not a second time for possibly further answers. Further, it is noted that each user only knows its own key. Therefore, for example the key 8a used by user 1 a is not known to users 1b and 1c. Therefore, the keys 8a, 8b, 8c are in general not identical. It is noted, that while the keys 8a, 8b, 8c are depicted with only three digits each for simplicity in Fig. 4, usually a key is expected to comprise much more digits, e.g. 100, 1000 or 10000 digits, so that keys which are provided by different users will normally be different, because the chance that two keys each composed of e.g. 1000 digits are identical is almost zero.

Then, preferably, each user 1 a, 1 b, 1 c provides its respective (encrypted) answer 9a, 9b, 9c to the aggregator which is specified by reference sign 2a in Fig. 4. This is, because in Fig. 4, there are two aggregators, namely 2a and 2b. Aggregator 2b receives from users 1 a, 1b and 1 c the respective key 8a, 8b, 8c.

This means, each user 1a, 1b, 1c sends its respective (encrypted) answer 9a, 9b, 9c to the aggregator 2a and each user 1 a, 1 b, 1 c sends its respective key 8a, 8b, 8c to the further aggregator 2b.

This means, aggregator 2a receives only the (encrypted) answers 9a, 9b and 9c and aggregator 2b receives only the keys 8a, 8b and 8c from the users 1 a, 1b and 1 c, respectively.

Preferably, the aggregators 2a and 2b do not collide, this means they are independent from each other, in the sense that none of them can access the data received by the other without its consent.

Further, in the embodiment depicted in Fig. 4, aggregator 2a combines the three (encrypted) answers 9a, 9b and 9c by an XOR combination, resulting in a first intermediate result 10a. For example, the first digit of (encrypted) answer 9a is "1", the first digit of (encrypted) answer 9b is "0" and the first digit of (encrypted) answer 9c is "0." Thus, since "1" XOR "0" XOR "0" is "1", the first digit of the intermediate result 10a is "1". The second and the third digits of the encrypted answers 9a, 9b, 9c are combined correspondingly.

Similarly, in the embodiment depicted in Fig. 4, aggregator 2b combines the keys 8a, 8b, 8c by an XOR combination into the intermediate result 10b.

Then, preferably, aggregator 2a receives the intermediate result 10b from aggregator 2b. Preferably, aggregator 2a combines its own intermediate result 10a with the intermediate result 10b received from the further aggregator 2b into the final result 11a, preferably by an XOR combination. This means, each digit of intermediate result 10a is combined by an XOR combination with the respective digit (on respective same position) of intermediate result 10b.

In the embodiment depicted in Fig. 4, the final result 11 achieved by aggregator 2a is the row of buckets including digits "1", "0", "1". By this, aggregator 2a determines that there are two users amongst the users 1 a, 1 b, 1 c which gave the answer "yes", and one user which gave the answer "0", because there are two "1" in the answer ("1" stands for "yes") and one "0" ("0" stands for "no").

However, from the final result 11 a, it cannot be determined which user 1 a, 1 b, 1 c gave which answer, because the correlation of the position of the "1" into the final result 11 a to a particular user 1a, 1b, 1c cannot be determined.

In other words, preferably, the aggregator 2a is not able to determine which user 1 a, 1 b, 1 c wrote to which index of the database (using the terminology that an answer corresponds to a database and a bucket is indicated by an index).

Preferably, the further aggregator 2b receives the first intermediate result 10a from the aggregator 2a and similarly combines its own second intermediate result 10b with the received intermediate result 10a into final result 11 b, preferably by an XOR combination. The final result 11 b should and usually will correspond to the final result 11a, as both are achieved by the XOR combination of the first and the second intermediate result 10a, 10b.

Preferably, the aggregator 2a transmits the final result 11 a to analyst 12. The analyst may also or alternatively receive the final result 11 b from aggregator 2b, e.g. for redundancy providing more security (e.g. against loss of data, or wrong calculation).

In this context, it is noted that the role of the aggregators 2a, 2b might be exchanged. Further instead of two aggregators 2a, 2b, two servers of one aggregator 2 might be used, e.g. a first server 2a and a second server 2b. In this case the reference signs in Fig. 4 would relate to the first server 2a and the second server 2b.

Preferably, by the implementation as described with reference to Fig. 4, information theoretic anonymity is provided, which means that even given unlimited computation resources and time, it is impossible for an attacker to de-anonymize an individual user.

Preferably, in any of the described embodiments, the answer of a user 1 is implemented in the form of buckets.

In a preferred embodiment, a bucket relates to the value of the answer, wherein the value of the answer may be one of two Boolean values, e.g. "yes" or "no", true or false, etc.

In other embodiments the value of the answer is a certain amount, for example an amount of years, an amount of money (e.g. related to the income). Each answer might include a row of three buckets. A bucket is related to a range of a plurality of ranges within a database, and is preferably indicated with an index. The range of a bucket may correspond to the value of the answer.
In one nonlimiting example, the query demands the age of the user, for which the answer is 62 years. The ranges of the three buckets are: in the first (left) bucket between 0 and 50 years, in the second (middle) bucket between 51 years and 100 years and in the third (right) bucket between 101 and 130 years. Therefore, the correct value of the answer being 62 years lies in the second range of an age between 51 and 100 years. Therefore, the second (middle) bucket of the answer includes a TRUE value, e.g. "1" digit, indicating that this range (namely between 51 and 100 years) corresponds to the value of the answer. Therefore the answer of the user is implemented as a row of a first bucket with a FALSE value, e.g. "0" digit, a second bucket with a TRUE value, e.g. "1" digit, and a third bucket with a FALSE value, e.g. "0" digit.

Preferably, since the user can only put either a "0" of "1" into a bucket to provide an answer, a protection against pollution answer attacks is provided. A pollution answer may be defined as an answer which is totally wrong, thus disturbing the result of the query too much.

For example, such an answer would be that the age of a user is 200 years to the query in regard of the age of the user. However, in this example, each bucket of a possible answer relates to a range of a plurality of ranges, e.g. a first bucket relates to a range of an age between 0 and 50 years, a second bucket relates to an age of 51 to 100 years, a third bucket relates to an age of 101 to 130 years. Since the user can only put a "1" into the bucket of a certain range (e.g. age between 0 - 50, 51 - 100, 101 - 130), the answer cannot be given with a value exceeding the proposed ranges. Therefore, an answer indicating an age of 200 years cannot be given.

Preferably, in any of the above described embodiments, the user encrypts the answer using Goldwasser-Micali.

Preferably, in any of the above described embodiments, the user generates differentially private noisy coins. Noisy coins may be also referred to simply as coins, and may be understood to be a form of noise.

A noisy coin is a construct that may be used to introduce a degree of randomness in answers provided by responders to provide deniability to a particular responder regarding his or her answer. For instance, a responded may figuratively flip a coin and answer truthfully if the coin flip yields "tails". But if the flip result is "heads", the responder flips a second coin, and responds "yes" if heads, and "no" if tails. Thus each individual responder has plausible deniability regarding his/her response. The combination of the first coin flip and the conditional changing of the result of the first coin flip is sometimes referred to as a "noisy coin". Interpretation of a set of responses relies on knowledge of the randomization process.
See, e.g. Cynthia Dwork and Aaron Roth, "The Algorithmic Foundations of Differential Privacy", Foundations and Trends in Theoretical Computer Science, Vol. 9, Nos. 3-4 (2014) pp 211-407 (DOI: 10.1561/0400000042), and Christopher Ferrie and Robin Blume-Kohout, "Estimating the bias of a noisy coin", AIP Conference Proceedings 31st. Eds. Philip Goyal, et al. Vol. 1443. No. 1. AIP (2012).

Preferably, this noise when added to an answer makes the answer less correct. Thus, on the one hand, answers to which noise is added, makes the query less efficient, because the result of the query is disturbed. On the other hand, noise added to the answers provides more anonymity to the users, because the correlation between a particular answer and the particular user which gave this answer is less clear. In other words, by the noise added to the answer, the answer appears "wrong" to a certain degree. Therefore, it is statistically less possible to derive who gave this answer. Nevertheless, despite the noise added to the answers, statistically the query in regard of a plurality of answers provides results which are sufficiently useful for a survey. The person skilled in the art knows the implementation of adding noisy coins to answers so as to achieve what is called differential privacy.

Preferably, in any of the above described embodiments, the aggregator 2 adds noisy coins to the answers, until a predetermined privacy threshold is satisfied.

In more detail, preferably, the aggregator 2 determines whether the sum of the answers is greater than a pre-defined privacy threshold. If the sum of the answers is not greater than the privacy threshold, then the aggregator 2 re-randomizes the answers and/or adds noisy coins to the answers to satisfy the privacy threshold.

In one embodiment, adding (noisy) coins to an answer is implemented as follows: The aggregator 2 maintains a pool of coins which is used and shared across the queries for a single analyst 3 for the noisy addition. Each user 1 periodically generates an encrypted unbiased coin, e.g. using the Goldwasser-Micali bit cryptostream, by randomly generating a value and encrypting. To defend against malicious users 1 (users which give a huge amount of answers which do not reflect the reality in an important degree, e.g. the age of a user would be 200 years old) the aggregator 2, when receiving the coin from the user 1, verifies the Jacobi symbol and drops coins which don't pass the verification; the aggregator 2 then blindly re-flips the coin by multiplying with the aggregator's 2 own unbiased coin plus a modulo operation.

Preferably, by encrypting the answer using Goldwasser-Micali by the user 1, the encryption ensures a different ciphertext even for the same plaintext. This is efficient and scales nicely as the encryption is encrypting a single bit.

Preferably, the aggregator 2 checks the legitimacy of the answer from the user 1, until the data is extracted from the data, e.g. during a random sampling phase. The aggregator 2 verifies the Jacobi symbol is equal to '+1' and may discard answers which don't pass.

In some embodiments, the number of (noisy) coins is determined as *n* = [(64ln(2*c*)/*ε*²] + 1, wherein c is the minimum number of clients to query, and wherein ε is a privacy parameter. This relationship implies that for a lower value of ε, a larger number of coins is needed to ensure privacy of the users 2. In some cases, it may be preferable to provide that at least this number n of coins is added to each and every bucket to provide a sufficient degree of anonymity to the users 1.

In the following description, an "epoch" is defined as a time period over which a standing query remains. In other words, an epoch may be viewed as the execution interval of a query.

Preferably, the implementation of adding noisy coins considers the following scenarios:

In a one embodiment, termed without implied limitation as "bursty window", many users 1 reply to the query. The aggregator 2 receives more than c answers before the epoch defined by the analyst 3 ends. Then the aggregator 2 provides the answers (including noisy coins) to the analyst 3 and informs the analyst 3 that a shorter epoch was achieved.

In some embodiments, in the event that fewer than c answers are received before the end of the epoch, the aggregator 2 may either wait until more answers are received, thus extending the epoch, or the aggregator 2 may add additional noise (thus implying a lower ε). The choice may be based on agreement with the analyst 3 on how to handle this situation.

In some embodiments, in the event that there are enough answers within the epoch, the aggregator 2 receives c answers with the specified epoch. The aggregator 2 then provides the answers (including noisy coins) to the analyst 3.

In some embodiments, portions of the described methods may be implemented in the Apache Kafka platform. Those skilled in the pertinent art will appreciate that Apache Kafka is an open-source stream processing platform developed by the Apache Software Foundation that may provide a unified, high-throughput, low-latency platform for handling real-time data feeds. Kafka may be implemented on a cluster of one or more servers, e.g. the analyst 3. The Kafka cluster stores streams of records received from "producers" in categories called "topics". Within this framework, answers received from the users 1 may be treated as record streams and written to a Kafka topic. The Kafka platform typically organizes received records as tuples. In some embodiments a sliding window is used to select a portion of the received answers received within the window. The sliding window is used to read windowed answers and write the tuples within the window to a new topic. The frequency of incoming data-is-tracked in order to determine the window for the addition of the noisy coins as described above. In some embodiments Little's law may be used. Those skilled in the art will appreciate that Little's law, sometimes expressed as ℓ = *λw*, asserts that the time average number of customers in a queueing system, ℓ, is equal to the rate at which customers arrive and enter the system, *λ*, times the average sojourn time of a customer, w. Applied to the present context, the epoch is used as the sojourn time. A desired throughput *λ* is thus ℓ/epoch. Further, answers are read from a new Kafka topic (once counted), and noise is added as described above based on.the incoming frequency.

In some embodiments, the users 1 receive the query, and predetermined values of ε, ℓ, and the epoch from the aggregator 2. Preferably, the users 1 maintain their privacy deficit, even if the aggregator 2 tries to send junk data.

Preferably, if ε is too small, then the answers are noisy and privacy is observed. If ε is too large, then the privacy budget is depleted faster than expected. However, privacy is still preserved. The users 1 may subtract epsilon and delta from their privacy deficit. Delta may be approximated to 1/c.

Further, the aggregator 2, after processing of the answers according to the respective implementation as described above, may transmit the processed answers to an analyst 3. The analyst 3 preferably decrypts and tabulates the answers received from the aggregator 2.

Preferably, the aggregator 2 adds a small random delay when sending the answers (data and coins) to the analyst 3.

The aggregator 2 may inform the analyst 3 of n (number of coins) added to each bucket.

The analyst 3 may decrypt the data and coins.

Then for each bucket the analyst 3 may sum the plaintext values and subtract n/2 to get the noisy aggregate answer.

Preferably, in any of the described embodiments, the method provides scalability in regard of the number of users 1 which are added to participate in the query.

Preferably, in any of the described embodiments, the method provides scalability in regard of the number of the queries which are running.

Preferably, in any of the described embodiments, the method allows for client churn ("client" means "user"), which means that users 1 may enter (being on-line) and leave (being off-line) without the need to re-start the query.

Preferably, in case the query is related to social network data, by randomly sampling and further preferably by adding noisy coins to the answers until the privacy threshold is reached, the method ensures that the social correlation links are broken, so that correlating friends or friends of friends is not sufficient to de-privatize an individual.

Preferably, the query is a one shot batch query. This means, the query is related to data which is given at a particular moment, in contrast to data which is given as a continuous data stream. In a one shot batch query, the answers of the users 1 reflect the data of the users 1 at a particular moment. E.g. the answer to the query, which user 1 is at a particular place, reflects the users 1 which are at the place at a particular moment when the query is sent to the users 1. Preferably, in a one shot batch query, the user data is assumed to be static, and further preferable the aggregate result (the result retrieved from the answers) remains unchanged during the course of the query execution, e.g. one hour, one day.

In other preferred embodiments, the query is a streaming query, which is a query which concerns streaming data. A streaming query concerns data which are continuously provided by the users 1, e.g. providing continuously data about web sites being visited by users 1 which might enter and leave a particular web site with the time going by.

In a preferred embodiment, the query is related to social network data of the users 1.

Preferably, the aggregator 2 is adapted to be used for the implementation of the described method for protecting privacy in data queries.

In particular, the aggregator 2 may be adapted to receive a plurality of answers from a respective plurality of users 1 to a query transmitted to the users 1 and may be further adapted to one or more of: randomly sampling a predetermined amount of the users 1; receiving the plurality of answers from the users 1 via an anonymity network 5; receiving the plurality of answers from the users 1, wherein the answers are encrypted using one-time pad encryption; and using software verifiable by the users 1 and/or hardware verifiable by the users 1. Herein and in the claims, "randomly sampling" and similar phrases mean that a proper subset, e.g. some but not all, of the answers are selected, e.g. by a random or pseudo-random selection process.

Further, a software product is claimed which is adapted to execute the described method for protecting privacy in data queries, when the software product is executed by a computer.

The computer may be implemented as a single unit, a stand-alone device, or within a database, integrated in another computer and/or within a computer network. The computer may be implemented through the use of hardware, software and/or hardware capable of executing software in association with appropriate software. The computer may be included into the aggregator 2.

More specifically, the computer can be comprised or implemented by circuit-based processes, including possible implementation as a single integrated circuit, such as an ASIC (= Application Specific Integrated Circuit) or such as an FPGA (= Field Programmable Gate Array), a multi-chip module, a single card, or a multi-card circuit pack. The functions of the computer may be implemented as processing blocks in a software program. Such software may be employed in a digital signal processor, micro-controller, or general-purpose computer implemented as a single device or integrated in a computer network.

The computer may comprise program code embodied in tangible media, such as magnetic recording media, optical recording media, solid state memory, floppy diskettes, CD-ROMs, hard drives, or any other machine-readable storage medium, wherein, when the program code is loaded into and executed in the computer, the computer becomes an apparatus used for practicing the invention.

## Claims

1. A method for protecting privacy in data queries, the method comprising:
receiving, by an aggregator (2), from a plurality of users (1) via an anonymity network, a corresponding plurality of answers to a query transmitted to the users (1) via the internet; and
controlling said aggregator with software and/or hardware verifiable by the users via the internet.

2. The method of claim 1, wherein the answers are encrypted using one-time pad encryption.

3. The method of claim 1, wherein the anonymity network comprises the Tor network.

4. The method according to claim 1, wherein using, by the aggregator (2), software verifiable by the users (1) and/or hardware verifiable by the users (1) comprises:
using, by the aggregator (2) and one or more nodes (6, 6a, 6b, 6c) between the aggregator (2) and the users (1), software verifiable by the users (1) and/or hardware verifiable by the users (1).

5. The method according to claim 4, wherein answers are sent from the users (1) to the aggregator (2) on the condition that the one or more nodes (6, 6a, 6b, 6c) and the aggregator (2) pass a respective verification test based on the software and/or hardware used by the one or more nodes (6, 6a, 6b, 6c) and the aggregator (2), respectively.

6. The method of claim 1 or claim 4, wherein using software verifiable by the users (1) comprises using digitally signed software; and wherein using hardware verifiable by the users (1) comprises using hardware including a route key.

7. The method of claim 2, further comprising
combining, by the aggregator (2, 2a), the plurality of answers by an XOR-operation resulting in a first intermediate result (10a);
receiving, by the aggregator (2, 2a) from a further aggregator (2b), a second intermediate result (10b), which is achieved by the further aggregator (2b) by combining a plurality of keys (8a, 8b, 8c) by an XOR-operation, wherein the further aggregator (2b) has received the plurality of keys (8a, 8b, 8c) from the users (1, 1a, 1c, 1d), each key (8a, 8b, 8c) corresponding to a respective answer (9a, 9b, 9c) of the plurality of answers, by which the users (1, 1a, 1b, 1c) previously encrypted their respective answers (7a, 7b, 7c) using one-time pad encryption; and
combining, by the aggregator (2, 2a), the first intermediate result (10a) and the second intermediate result (10b) by an XOR-operation, resulting in a final result (11a).

8. The method of claim 7, wherein the answers (7a, 7b, 7c; 9a, 9b, 9c), the keys (8a, 8b, 8c), and the first and the second intermediate results (10a, 10b) are implemented by respective rows of digits, and wherein combining the plurality of answers (9a, 9b, 9c), a plurality of keys (8a, 8b, 8c), the first intermediate result (10a) and the second intermediate result (10b) comprises combining the corresponding digits of the answers (9a, 9b, 9c), the keys (8a, 8b, 8c), and the first and the second intermediate results (10a, 10b), by an XOR-operation, and wherein encrypting the answers (7a, 7b, 7c) using one-time pad encryption comprises combining the digits of the answers (7a, 7b, 7c) with the digits of the respective keys (8a, 8b, 8c) by an XOR-operation.

9. The method of claim 1, wherein the answers of the users (1) are each represented by an entry in a corresponding indexed location of a database.

10. The method according to claim 9, wherein each indexed location corresponds to a range of a plurality of ranges of answers, and wherein a particular user (1) of the plurality of users provides its respective answer by storing a TRUE value in the indexed location corresponding to the range that includes the value of said answer, and by storing a FALSE value in each indexed location of the database that does not correspond to the value of said answer.

11. The method according to claim 1, wherein the method further comprises one or more of:
verifying, by the aggregator (2), a respective Jacobi symbol of a respective answer of the plurality of answers received from the users (1), wherein the answers are previously encrypted by the users (1) using a Goldwasser-Micali cryptosystem; and
rerandomizing the answers by the aggregator (2).

12. The method according to claim 1, further comprising:
adding, by the aggregator (2), noisy coins to the answers until a predetermined privacy threshold is satisfied.

13. The method according to claim 1, wherein the query is a one shot batch query.

14. An aggregator (2) used for protecting privacy in data queries, the aggregator (2) being adapted to:
receive via an anonymity network a plurality of answers from a respective plurality of users (1) to a query transmitted to the users (1) via the internet; and
operate using software and/or hardware verifiable by the users via the internet.

15. A software product adapted to execute the method according to claims 1 - 13, when executed by a computer.
